Europäisches Patentamt

European Patent Office

Office européen des brevets

(11) Publication number: **0 411 429 A2**

# EUROPEAN PATENT APPLICATION

(21) Application number: 90114109.3

(22) Date of filing: 24.07.90

(51) Int. Cl.5: **C08L 27/02, C08K 13/04,**
**//(C08K13/04,3:00,5:00,7:00)**

(30) Priority: 31.07.89 US 386831

(43) Date of publication of application:
06.02.91 Bulletin 91/06

(84) Designated Contracting States:
**BE CH DE ES FR GB IT LI NL SE**

(71) Applicant: **The B.F. Goodrich Company**
**3925 Embassy Parkway**
**Akron Ohio 44313(US)**

(72) Inventor: **Summers, James William**
**Wolf Road**
**Bay Village, Ohio 44140(US)**

(74) Representative: **von Kreisler, Alek,**
**Dipl.-Chem. et al**
**Patentanwälte Von Kreisler-Selting-Werner,**
**Deichmannhaus am Hauptbahnhof**
**D-5000 Köln 1(DE)**

(54) Articles from reinforced plasticized polyvinyl halide resin.

(57) Articles are made from a polyvinyl halide composition comprising a high molecular weight polyvinyl halide resin, a plasticizer, and a reinforcement material, such as glass fibers, and the article exhibits good strength at high use temperatures.

## ARTICLES FROM REINFORCED PLASTICIZED POLYVINYL HALIDE RESIN

### Background of The Invention

This invention relates to plasticized polyvinyl halide resins reinforced with glass fibers, and molded articles made from such compositions.

Rigid polyvinyl halide resins, such as polyvinyl chloride are used for injection molded or extruded articles. The PVC exhibits strength and creep resistance at temperatures up to its glass transition temperature. To increase the stiffness or modulus of the PVC glass fiber reinforcement can be added. Low molecular weight PVC is chosen, particularly for injection molding applications because of the flowability.

Because high molecular weight PVC exhibits a higher viscosity, its use in injection molding is discouraged. It does not fill the molds adequately because of its limited flowability. This is unfortunate because the higher molecular weight exhibits better creep resistance at temperatures above the glass transition temperature of the material. Although the flowability of high molecular weight PVC can be improved with the addition of a plasticizer, this addition lowers the glass transition temperature of the material. This lowering of the glass transition temperature would indicate that creep resistance and stiffness at higher temperatures will be consequently lowered.

Although fiber reinforced rigid low molecular weight PVC exhibits adequate flow in the molding process, higher strength at high use temperatures is sought. Therefore, new compositions which would have the balance of flow and higher strength at high use temperatures are desired.

### Summary of the Invention

In one aspect, this invention is a polyvinyl halide composition comprising a mixture of polyvinyl halide resin and a plasticizer, and a reinforcement material dispersed in the resin and plasticizer mixture.

In another aspect, this invention is an article prepared from the above-described polyvinyl halide composition in a process wherein the composition is subjected to molding conditions.

In yet another aspect, this invention is a process for preparing a molded article comprising subjecting the above-described polyvinyl halide composition to temperatures sufficient to fuse the resin, and a pressure sufficient to mold the composition into the form of the article.

In still yet another aspect, the above-described composition is comprised of a high molecular weight polyvinyl halide resin, wherein the resin exhibits an intrinsic viscosity measured according to ASTM D1243 of above about 1.0, and the composition exhibits a storage modulus at 121°C of greater than about $1 \times 10^7$ dynes/cm$^2$, at a plasticizer level of greater than about 15 parts plasticizer for 100 parts resin.

Despite the fact that adding the plasticizer to the resin lowers the glass transition temperature, the composition exhibits better strength at 121°C than rigid polyvinyl halide resins which have higher glass transition temperatures. The plasticizer improves the flowability of the composition while the dispersed reinforcement enhances the strength at high temperatures. The compositions of this invention are useful in the manufacture of plastic molded articles requiring high use temperatures under low load conditions. Examples of such articles include window surrounds, body side moldings, arm rests and covers in automobiles, and in window frames.

### DETAILED DESCRIPTION OF THE INVENTION

The polyvinyl halide polymers used in this invention are prepared from vinyl halide monomers. Especially preferred polyvinyl halide polymers are polyvinyl chloride polymers, and the remainder of the specification will discuss the aspects of the invention in reference to polyvinyl chloride. Any of the conventional processes for making such polymers such as mass, suspension, solution or emulsion polymerization can be used. A mass and suspension polymerizations are the preferred processes. The process to be described is a suspension process. When using the suspension process, suitable dispersing agents or suspending agents, such as known in the art, may be used. Examples of suitable dispersants are partially hydrolyzed polyvinyl alcohol, cellulose ether, starch, gelatin, and the like. The level of dispersant used will be less than about 0.5 part by weight per 100 parts by weight of monomer. Excellent results are obtained with from 0.05 to 0.3 part by weight of dispersant per 100 parts by weight of monomer.

The polymerization is initiated with a free radical catalyst. The monomer-soluble or oil-soluble catalysts that may be used in the polymerization process to produce the polyvinyl chloride polymer used in this invention are the alkanoyl, aroyl, alkaroyl, and aralkanoyl diperoxides and monohydroperoxides, azo compounds, peroxy ester, percarbonates, and other free radical type catalysts. As examples of such catalysts, there may be named benzoyl peroxide, lauryl peroxide, diacetyl peroxide, diisopropylbenzene hydroperoxide, 2,4-dichlorobenzoyl peroxide, naphthoyl peroxide, t-butyl perbenzoate, di-t-butyl perphthalate, isopropyl percarbonate, acetyl cyclohexane sulfonyl peroxide, disecondary butyl peroxydicarbonate, 5-butyl peroxyneodecanoate, di-normal propyl peroxydicarbonate, azo-bisisobutyronitrile, $\alpha,\alpha'$-azodiisobutyrate, 2,2'-azo-bis-(2,4-dimethyl valeronitrile), and many others. The particular free radical catalyst employed will depend upon the monomeric material(s) being polymerized, the molecular weight and color requirements of the polymer, the temperature of polymerization, etc. Insofar as the amount of catalyst employed is concerned, it has been found that an amount in the range of about 0.005 parts by weight to about 1.00 parts by weight, based on 100 parts by weight of the monomer or monomers being polymerized, is satisfactory. However, it is preferred to employ an amount of catalyst in the range of about 0.01 part by weight to about 0.20 part by weight based on 100 parts by weight of monomer(s).

The suspension polymerization process to produce the PVC polymers of this invention is carried out at any temperature which is normal for the monomeric material to be polymerized. Preferably, a temperature in the range of about 0°C to about 100°C is employed, more preferably from about 30°C to about 60°C. In order to facilitate temperature control during the polymerization process, the reaction medium is kept in contact with cooling surfaces cooled by water, brine, evaporation, etc. This is accomplished by employing a jacketed polymerization reactor wherein the cooling materials are circulated through the jacket throughout the polymerization reaction. This cooling is necessary since most all of the polymerization reactions are exothermic in nature. It is understood, of course, that a heating medium can be circulated through the jacket, if necessary.

Although the polymer can be a copolymer of the vinyl or vinylidene halide and an ethylenically unsaturated comonomer, it is preferred that the polymer or resin be a homopolymer of polyvinyl chloride. The homopolymer will have physical crosslinks of high melting crystallites. The addition of a comonomer lowers the number of these crystallites. Thus, if a comonomer is to be used, it should be one which will impart a degree of rigidity to the copolymer, as contrasted with imparting a degree of elasticity or rubbery nature, and it should be used only in minor amounts. This amount can vary according to the intended use temperature. For some comonomers, even as little as 4% can have detrimental effects on the strength of the composition at high use temperatures.

The polyvinyl chloride polymers have high molecular weight. The higher molecular weights assist in building strength. Any polymer with a molecular weight sufficient to provide a plasticized reinforced composition having a storage modulus at 121°C of at least about $1 \times 10^7$ is suitable. This molecular weight can vary according to the amount of plasticizer or reinforcement to be added, but typically as measured by intrinsic viscosity is above about 1.0, but preferably ranges from about 1.1 intrinsic viscosity to about 2.4, and more preferably from about 1.4 to about 1.7. The intrinsic viscosity is measured by ASTM D1243.

The plasticizers useful in this invention are any of the conventional plasticizers used with polyvinyl chloride. The amount of plasticizer employed is the minimum amount necessary to impart proper flow to the high molecular weight polyvinyl chloride polymer. This flow is proper when the polymer is able to flow into the pattern of the mold used. Such amount can vary depending on the molecular weight of the polymer as well as the amount of reinforcement or other filler material employed. Relatively lower molecular weight polymers will require the use of a lower amount of plasticizer, while using a large volume of reinforcement or filler may require the use of a larger amount of plasticizer. It is desirable that enough plasticizer is added to impart a spiral melt flow in a 0.36 by 0.16 inch channel of above about 40 inches, and preferably of from about 50 to about 70 inches. Typically, for the high molecular weight polymers contemplated for use in this invention, the amount of plasticizer can range from about 15 parts per hundred resin to about 100 parts per hundred resin, and preferably from about 20 parts per hundred resin to about 40 parts per hundred resin.

Examples of suitable plasticizers include the phthalates, epoxides, aliphatic diesters, phosphates and polyesters. Preferred are the phthalates and epoxides. Examples of preferred phthalates include dioctyl phthalate, diisooctyl phthalate, diisodecylphthalate. Preferred epoxides include epoxidized soybean oil, and epoxidized linseed oil. As used in the present invention, a single plasticizer can be employed, as well as blends of different types of plasticizers. An example of a preferred blend is a blend of 85 parts per hundred parts resin of dioctyl phthalate and 5 parts per hundred parts resin of epoxidized soybean oil.

The reinforcement material used in this invention is any material which can be mixed into and subsequently dispersed in the plasticized polyvinyl chloride mixture which will not detrimentally effect the flowability of the plasticized polyvinyl chloride mixture but which will increase or enhance a physical property of the mixture at the use temperature. Preferably, the property increased is storage modulus, although creep resistance, and the like are also suitable. The amount of such reinforcement will vary according to the type used, the molecular weight of the polyvinyl chloride polymer, and the level of plasticizer used. Typically, for the high molecular weight polyvinyl chloride polymers and plasticizer level contemplated for use in this invention, the amount of reinforcement used to increase the storage modulus can range from about 5 parts per hundred resin to about 100 parts per hundred resin, and preferably from about 5 percent to about 40 percent by weight.

Examples of suitable filler materials sufficient to improve strength include glass, either mat, woven or non woven fibers; stainless steel shavings; calcium carbonate; polymeric fibers, such as aramid; or elastomeric materials such as rubber. The preferred material is glass fibers due to its efficiency. For example, adding 15 parts per hundred glass can provide effectively equivalent improvement in strength to a plasticized polyvinyl chloride composition as compared to the same composition reinforced with 100 parts per hundred calcium carbonate. The amount of glass used can range from about 5 percent to about 40 percent by weight, and preferably from about 10 to about 30 percent by weight.

The glass used in this invention can be sized or non-sized. A preferred sizing and coupling agent are disclosed in U.S. Patent 4,536,360 to Rahrig, herein incorporated by reference.

The plasticized reinforced polyvinyl chloride composition of this invention can also contain other additives such as pigments, fillers, lubricants, and the like. Suitable materials which provide these functions are known in the art.

To prepare the composition, it is desirable to first mix the amount of plasticizer needed to provide the desired flowability with the polyvinyl chloride resin and then add the amount of reinforcement material. As a result of the mixing, the reinforcement material, whether initially in long glass fibers or not, will be crushed and broken, and will be dispersed relatively uniformly throughout the mixture. The articles to be made from the composition will generally be prepared at high temperature under pressure. The temperature is high enough to fuse the resin particles, and the pressure is high enough to force the molten composition into the mold pattern. Typically such temperatures range from about $175^\circ$ C to about $235^\circ$ F, and preferably from about $180^\circ$ C to about $210^\circ$ C. The pressures are generally those encountered in injection molding and extrusion. The composition is also useful in compression molding, although this process is not favored as a commercial process.

The plasticized reinforced polyvinyl chloride composition has substantial strength under low load conditions at high temperature. Its storage modulus at $121^\circ$ C can range from about $5 \times 10^6$ to about $1 \times 10^9$ dynes/cm$^2$, and preferably from about $1 \times 10^7$ to about $1 \times 10^8$ dynes/cm$^2$. One test which demonstrates this strength is an oven sag test, in which an article formed from the composition of this invention is held at one end in a clamp and is subjected to high temperature. One and a half inch in length and 1/8 inch thick articles made from the composition of this invention exhibit less than $10^\circ$, preferably less than $5^\circ$ and more preferably about $0^\circ$ sag after exposure to $120^\circ$ C for 30 minutes.

The following examples illustrate the concept of this invention, but do not limit the scope of the claims.

## Example 1

A molding is prepared by injection molding from the following ingredients (unless stated otherwise, all parts are in parts per hundred resin):

| Compound | Amount |
| --- | --- |
| A polyvinyl chloride homopolymer resin (intrinsic viscosity of 1.6) | 100 |
| Hycar® 2301 x 120 (Rubber process aid) | 8 |
| Dioctyl Phthalate | 85 |
| Epoxidized Soybean Oil | 5 |
| Barium/Cadmium (Heat Stabilizer) | 100 |
| Carbon Black | 0.3 |
| Oxidized polyethylene (Lubricant) | 0.3 |
| Parafin Wax (Lubricant) | 0.3 |
| Glass Fiber (in weight percent, 33 parts per hundred resin) | 10 |

The PVC, process aid, plasticizers, stabilizers, pigments and lubricants are powder mixed in an intensive mixer manufactured by Henshel. The powder mixture is heated and sheared to a melt in Buss Kneader compounding equipment. A second port on the Buss Kneader is equipped with a feeding screw, through which the glass fibers are added. The melt and glass mixture is sheared to uniformly disperse the glass throughout the melt. The mixture is then pelletized, and this pelletized compound is then molded into 0.125 inch thick bars at 200°C melt temperature on an injection molding machine with a 75 ton clamp pressure. The mixture exhibits a spiral melt flow in a 0.16 inch by 0.36 inch channel of 55 inches. The mixture is cooled to allow it to solidify, and the following oven test is performed.

A 1.5 inch long and 0.125 inch thick piece was placed in a clamp in an oven. After subjecting the piece to 121°C for 30 minutes, the piece exhibited 0° sag. The storage modulus of the piece at 121°C is greater than about $1 \times 10^7$ dynes/cm$^2$.

Example 2

A second molding is prepared from the above-described composition in a similar manner, except that 20 weight percent glass is used rather than 10 weight percent. The mixture exhibits a spiral melt flow of about 46 inches. After subjecting a piece having the same dimensions as in Example 1 to 121°C for 30 minutes, the piece exhibited 0° sag. The storage modulus at 121°C is greater than $1 \times 10^7$ dynes/cm$^2$.

**Claims**

1. A polyvinyl halide composition comprising a high molecular weight polyvinyl halide resin and a plasticizer mixture and a reinforcement material dispersed throughout the mixture.

2. The composition of claim 1 wherein the polyvinyl halide resin is polyvinyl chloride resin which has an intrinsic viscosity of from about 1.1 to about 2.4.

3. The composition of claim 2, wherein the amount of plasticizer employed is an amount sufficient to provide a spiral melt flow in a 0.36 by 0.16 inch channel of about 40 inches.

4. The composition of claim 3, wherein the reinforcement material is glass fibers, stainless steel shavings, calcium carbonate, polymeric fibers, or elastomeric material.

5. The composition of claim 4, wherein the plasticizer is dioctyl phthalate and the reinforcement material is glass fiber.

6. The composition of claim 2, wherein the polyvinyl chloride resin has an intrinsic viscosity of between about 1.4 and 1.6 and is employed at about 100 parts, the plasticizer is employed at between 15 parts per hundred resin and 100 parts per hundred resin, and the reinforcement material is glass fibers and is employed at between about 5 percent to about 40 percent by weight of the composition.

7. The composition of claim 5, wherein the polyvinyl chloride resin has an intrinsic viscosity of between about 1.4 and 1.6 and is employed at about 100 parts, the plasticizer is employed at between 15 parts per hundred resin and 100 parts per hundred resin, and the reinforcement material is glass fibers employed at between about 5 percent to about 40 percent by weight of the composition.

8. An article prepared by subjecting the composition of claim 1 to temperatures sufficient to melt and fuse the polyvinyl halide resin, followed by cooling the article.

9. The article of claim 8, exhibiting a storage modulus of greater than $1 \times 10^7$ dynes/cm$^2$ at 121°C.

10. The article of claim 9, wherein the process is an injection molding process.